# EUROPEAN PATENT SPECIFICATION

(11) **EP 3 179 634 B1**
(45) Date of publication and mention of the grant of the patent: **21.04.2021**
(21) Application number: 15306993.5
(22) Date of filing: 11.12.2015
(51) Int. Cl.: H04B 1/04, H04B 1/18, H01P 1/213, H01Q 1/26, H01Q 9/28, H01Q 13/02, H01Q 13/08

(54) **A RADIATING/RECEIVING ELEMENT FOR A COMPACT MULTIBAND ANTENNA**
STRAHLUNGS-/AUFNAHMEELEMENT FÜR EINE KOMPAKTE MEHRBANDANTENNE
ÉLÉMENT DE RAYONNEMENT/RÉCEPTION POUR UNE ANTENNE MULTIBANDE COMPACTE

(43) Date of publication of application: 14.06.2017
(73) Proprietor: Nokia Shanghai Bell Co., Ltd., Shanghai 201206 (CN)
(72) Inventor: HAREL, Jean-Pierre, 22305 Lannion (FR)
(74) Representative: Novagraaf Technologies

(56) References cited:
- US-A1- 2007 188 388
- US-A1- 2014 085 160

## Description

### BACKGROUND OF THE INVENTION

### Field of the invention

The present invention generally relates to a radiating/receiving element that can be used for constructing a compact multiband antenna for a wireless network base station. An antenna generaly comprises an array of radiating/receiving modules, each module comprising two radiating/receiving elements respectively corresponding to a first and a second polarization planes. In what follows we will use the terms "radiating/receiving module" and "radiating/receiving element", because a same antenna element can be alternately used for reception as well as for transmission.

Generally, a radiating/receiving element comprises a pair of radiating/receiving parts that actually transmit/receive waves, and that are respectively connected to the two conductors of a feeding line. For instance, the radiating/receiving parts are a dipole that comprises two linear conductive parts that are on a same line, and are symmetrical with respect to the center of the radiating/receiving element.

The development of base station antenna business is today mainly driven by:
- A constant increase of the number of radiating/receiving elements that must be placed inside a same physical support constituting an antenna, because the number of available frequency band increases
- A wanted cost reduction.

Therefore the currently used antennas generally are "multiband antennas" and even "ultra broad band antennas".

### Description of the prior art

A first type of multiband antennas comprises several arrays of monoband radiating/receiving modules, each array being dedicated to a different frequency band. A new array of monoband radiating/receiving modules can be added for each new frequency band to be used. However it is more and more difficult to increase the number of arrays placed inside a same antenna because the dimensions of a multiband antenna are limited by official regulations and physical constraints such as weight, wind load factor, etc. Furthermore, adding more and more arrays within limited dimensions (in particular the limited width of a multiband antenna) adversely affects the characteristics of the antenna in the frequency bands, as concerns their respective radiating/receiving patterns, gains, impedance matchings, isolations, etc.

Today a second type of multiband antennas is known. It comprises a single array of multiband radiating/receiving modules. Each multiband module comprises two radiating/receiving elements correspondaing to the two polarization planes. Each multiband radiating/receiving element comprises a single port common for all the frequency bands. There are two methods for feeding this port:
- a) This port is linked, by a short multiband transmission line, to a multiplexer/demultiplexer that is dedicated only to a given radiating-receiving element, and is placed in the neighbourhood of this given radiating/receiving element, on the radiating/receiving face of a large metal plate supporting the whole array of multiband radiating/receiving modules constituting the multiband antenna. For each polarization, these multiplexers/demultiplexers are all linked by a same monoband feeding network for each frequency band. This feeding network is usually placed on the radiating/receiving face of the metal plate or on the other face of this plate. The presence of the feeding networks and of these multiplexers/demultiplexers on the radiating/receiving face of the metal plate reduces the free space for supporting the whole array. So the drawback of this method is that the presence of the multiplexers/demultiplexers can easily degrade the antenna characteristics.
- b) The port can be linked, by a multiband feeding network dedicated to this port, to a multiplexing/demultiplexing unit being common to all the radiating/receiving elements of the antenna, for a given polarization.

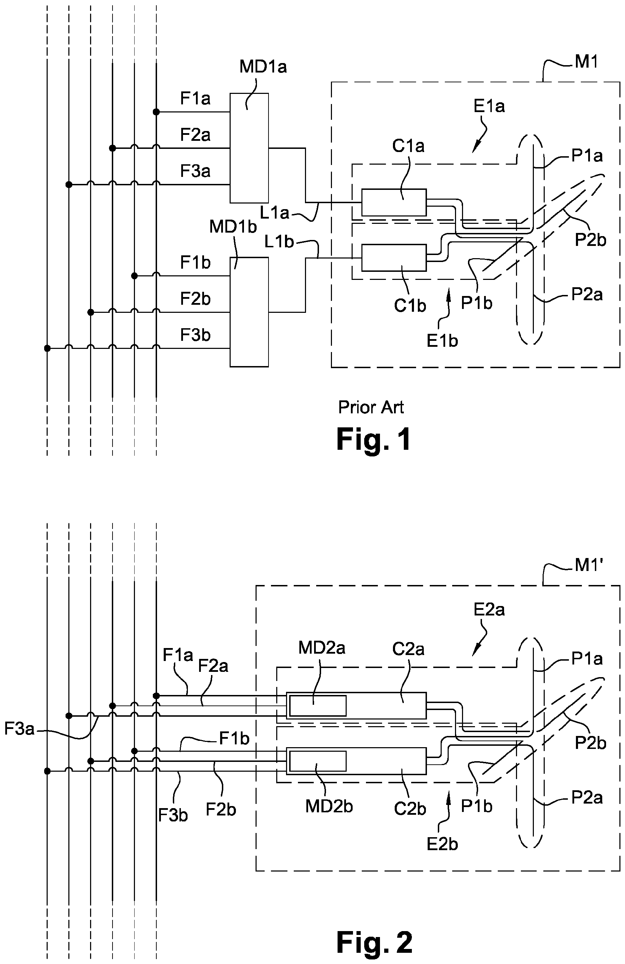

**Figure 1** illustrates the first known feeding method (Method a).

It schematically represents a classical multiband antenna comprising an array of n identical modules M1, ..., Mn. The module M1 is the only one represented on this figure. It comprises two orthogonal classical circuit radiating/receiving elements E1a, E1b, for two orthogonal polarization planes.

The radiating/receiving elements E1a comprises a multiband feeding and impedance matching circuit C1a that is coupled to a dipole P1a, P2a.

The radiating/receiving elements E1b comprises a multiband feeding and impedance matching circuit C1b that is coupled to a dipole P1b, P2b.

The antenna comprises n pairs of identical multiplexer/demultiplexers MD1a, MD1b, ...., MDna, ..., MDnb respectively coupled to the n modules M1, ..., Mn. They are located on the radiating/receiving face of a large metal plate supporting the whole array of multiband radiating/receiving modules M1, ..., Mn constituting the multiband antenna. Only the multiplexers/demultiplexers MD1a, MD1b are represented on this figure.

For instance, the multiplexer/demultiplexer MD1a is coupled by a transmission line L1a to the multiband feeding and impedance matching circuit C1a that is coupled to the dipole P1a, P1a of the module M1.

The multiplexer/demultiplexer MD1b is coupled by a transmission line L1b to the multiband feeding and impedance matching circuit C1b that is coupled to the dipole P1b, P2b of the module M1.

The multiplexers/demultiplexers MD1a, MD1b that are dedicated only to this module M1 are located in the neighbourhood of this module M1, on the radiating/receiving face of the metal plate supporting the antenna.

The multiplexer/demultiplexer MD1a is linked to three monoband ports for receiving/transmitting signals respectively in three different frequency bands, F1a, F2a, F3a. These ports are destinated to be connected to three monoband feeding lines on the radiating/receiving face of the metal plate, each of these monoband feeding lines being common to all the multiplexers/demultiplexers of the antenna, for a first polarization plane.

The multiplexer/demultiplexer MD1b comprise three monoband ports for receiving/transmitting signals respectively in the three different frequency bands, F1b, F2b, F3b. These ports are destinated to be respectively connected to three monoband feeding lines on the radiating/receiving face of the metal plate, each of these monoband feeding lines being common to all the multiplexers/demultiplexers of the antenna, for a second polarization plane.

The more the number of antenna arrays increases, the more the area occupied by the multiplexers/demultiplexers MD1a, MD1b, ...., MDna, ..., MDnb, impacts the dimensions of the antenna.

Thus, there is a need to provide a technical solution for improving the compactness of an antenna, without degrading the antenna characteristics.

US 2014/085160 and US 2007/188388 disclose compact multiband antennas comprising two radiating/receiving parts and a feeding and impedance matching circuit coupled to the radiating/receiving parts, wherein a multiplexer/demultiplexer for a plurality of frequency bands is embedded into said feeding and impedance matching circuit coupled to the radiating/receiving parts.

### SUMMARY OF THE INVENTION

The invention is defined by the appended claims.

Thanks to the fact that a multiplexer/demultiplexer, for a plurality of frequency bands, is embedded into the feeding and impedance matching circuit, the encumbrance of the feeding and impedance matching circuit is not noticeable. So the multiband radiating/receiving element according to the invention enables to construct a multiband antenna comprising an array of such radiating/receiving elements without adding a series of cumbersome multiplexers/demultiplexers in the neighborhoods of the radiating/receiving elements. As the connections between the monoband feeding lines and the radiating/receiving elements are direct, an array of such elements may constitute a more compact multiband antenna.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be done with reference to the accompanying drawings. If possible, like or similar reference numerals designate the same or similar components throughout the figures thereof and description, in which:
- Figure 1, described above, schematically represents a part of a multiband antenna comprising an array of n identical modules, each module comprising two radiating/receiving elements according to the prior art.
- Figure 2 schematically represents a part of a multiband antenna comprising an array of n identical modules, each module comprising two radiating/receiving elements that are a first embodiment of the radiating/receiving element according to the invention.
- Figures 3 and 4 respectively represent a printed circuit dipole according to the prior art and a second embodiment of the radiating/receiving element according to the invention, constituted by a printed circuit dipole modified according to the invention, for comparison.
- Figures 5 to 6 represent two views of a sixth embodiment of the radiating/receiving element according to the invention, comprising a pre-constructed module.
- Figures 7 to 9 schematically represent three views of a fourth embodiment of the radiating/receiving element according to the invention, comprising two pre-constructed modules.
- Figures 10 to 12 schematically represent three views of a fifth embodiment of the radiating/receiving element according to the invention, comprising one pre-constructed module.- Figure 13 schematically represent a Vivaldi radiating/receiving element according to the prior art.
- Figure 14 schematically represent a Vivaldi radiating/receiving element modified according to the invention.
- Figure 15 schematically represents a horn antenna having a square section and comprising two orthogonal Vivaldi radiating/receiving elements modified according to the invention.
- Figure 16 schematically represent a section of this horn antenna along its symmetry axis.
- Figure 17 represents a dipole made of a buckled brass plate.
- Figure 18 represents an eighth embodiment of the radiating/receiving element according to the invention, comprising such a dipole made of a buckled brass plate.

### DETAILED DESCRIPTION OF THE PREFERRED EMBODIMENTS

**Figure 2** schematically represents a part of a multiband antenna comprising an array of n identical modules M1', ..., Mn', each module comprising two radiating/receiving elements that are a first embodiment of the radiating/receiving element according to the invention. The module M1' is the only one represented on this figure. It comprises two orthogonal multiband printed circuit radiating/receiving elements E2a and E2b according to the invention.

The radiating/receiving element E2a comprises a dipole P1a-P2a, linked to a circuit C2a comprising classical means for feeding and impedance matching, these means embedding a multiplexer/demultiplexer MD2a. The element E2b comprises a dipole P1b-P2b linked to a circuit C2b comprising classical means for feeding and impedance matching, these means embedding a multiplexer/demultiplexer MD2b. The dipole P1a-P2a is orthogonal to the dipole P1b-P2b.

The embedded multiplexer/demultiplexer MD2a is dedicated only to this radiating/receiving element E2a. The embedded multiplexer/demultiplexer MD2b is dedicated only to the radiating-receiving element E2b.

The multiplexer/demultiplexer MD2a is linked to three monoband ports for receiving/transmitting signals respectively in three different frequency bands, F1a, F2a, F3a. These ports are destinated to be respectively connected to three feeding lines on the radiating/receiving face of the metal plate, each of these monoband feeding lines being common to all the multiplexers/demultiplexers of the antenna, for a first polarization plane.

The multiplexer/demultiplexer MD2b comprise three monoband ports for receiving/transmitting signals respectively in the three different frequency bands, F1b, F2b, F3b. These ports are destinated to be respectively connected to three monoband feeding lines on the radiating/receiving face of the metal plate, each of these monoband feeding lines being common to all the multiplexers/demultiplexers of the antenna, for a second polarization plane.

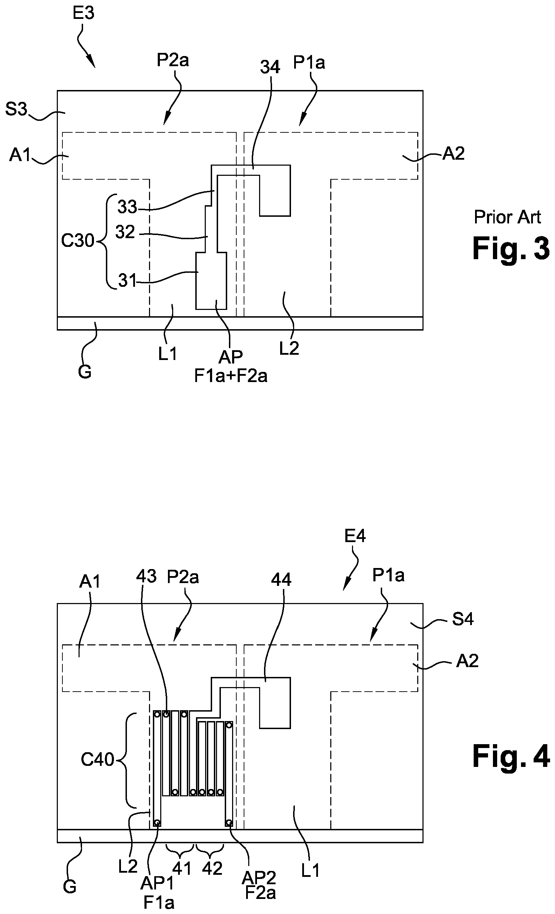

**Figure 3** schematically represents a radiating/receiving element E3 according to the prior art. It comprises:
- A ground plane G.
- A double sided printed circuit board comprising a dielectric plane substrate S, and being orthogonal the ground plane G.

On a first side of the printed circuit board, the conductive layer has been etched for creating a dipole P1a-P2a constituted of two L shaped conductive parts. The pole P1a comprises a leg L1 that is orthogonal to an arm A1. The pole P2a comprises a leg L2 that is orthogonal to an arm A2. The legs L1 and L2 are parallel to each other and are separated by a constant distance between them. The legs L1 and L2 are linked to the ground plane G.

The two arms A1, A2 are aligned and constitute the radiating/receiving parts of the dipole P1a-P2a.

On the second side of the printed circuit board, the conductive layer has been etched for creating a classical feeding and impedance matching circuit C30 comprising a transmission line made of three successive rectangles 31, 32, 33 with decreasing width, in this example. At a first end of the series of rectangles 31, 32, 33, an L shaped feeding line 34 is coupled to the dipole P1a-P2a. At a second end of the series of rectangles 31, 32, 33, an access port AP is connected to the inner conductor of a coaxial cable (not represented), whereas the ground plane G is connected to the shield of the coaxial cable.

Classically, the coaxial cable is linked to a multiplexer/demultiplexer that is outside the radiating element and is not represented on this Figure 3. This coaxial cable supplies/receives a signal wherein a first frequency band F1a and a second frequency band F2a are multiplexed.

A classical antenna for transmitting/receiving in two orthogonal polarization planes can be made by assembling two such radiating/ receiving elements E3 so that their respective planes are orthogonal to each other and are symmetrical around a common symmetry axis.

**Figure 4** schematically represents a second embodiment E4 of the radiating/receiving element according to the invention. As the classical radiating/receiving element E3, it comprises:
- A ground plane G.
- A double sided printed circuit board comprising a dielectric plane substrate S, and being orthogonal the ground plane G.

On a first side of the printed circuit board, the conductive layer has been etched for creating a dipole P1a-P2a constituted of two L shaped conductive parts. The pole P1a comprises a leg L1 that is orthogonal to an arm A1. The pole P2a comprises a leg L2 that is orthogonal to an arm A2. The legs L1 and L2 are parallel to each other and are separated by a constant distance between them. Both are linked to the ground plane G. The two arms A1, A2 are aligned and constitute the radiating/receiving parts of the dipole. The legs L1 and L2 are classically linked to the ground plane G.

On the second side of the printed circuit board, the conductive layer has been etched for creating a feeding and impedance matching circuit C40 embedding a multiplexer-demultiplexer 41-42, according to the invention.

This element E4 is similar to the element E3 described with reference Figure 3, except the feeding and impedance matching circuit C40. This latter has been etched in front of the leg L2 of the dipole P2a, on the second side of the printed circuit. It embeds a multiplexer/de-multiplexer 41-42, without modifying the dimensions of the radiating/receiving element. This multiplexer/demultiplexer 41-42 is constituted, in this example, by a classical combline band pass filter 41 and a classical interdigital band pass filter 42, respectively for a frequency band F1a and for a frequency band F2a.

Via holes 43 create electrical straps between parts of the multiplexer-demultiplexer 41-42 and the leg L2 of the pole P2a of the dipole. The ends of the legs L1 and L2 are classically linked to the ground plane G.

At one end of the feeding and impedance matching circuit C40, an L shaped feeding line 44 is classically coupled to the dipole P1a-P2a. At the other end of the feeding and impedance matching circuit C40, two short micro striplines constitute two access ports AP1, AP2 that are respectively connected to the inner conductors of two coaxial cables (not represented), whereas the ground plane G is connected to the shields of these coaxial cables.

The access port AP1 receives/transmits a first monoband signal in the frequency band F1a. The access port AP2 receives/transmits a second monoband signal in the frequency band F2a. The multiplexer/demultiplexer 41-42, embedded in the feeding and impedance matching circuit C40, multiplexes/demultiplexers these two monoband signals and supplies/receives a multiband signal to/from the L shaped feeding line 44 that is coupled to the dipole P1a, P2a.

The construction of a multiplexer/demultiplexer made of a combline filter 41 and an interdigital filter 42 is within the scope of a man skilled in the art.

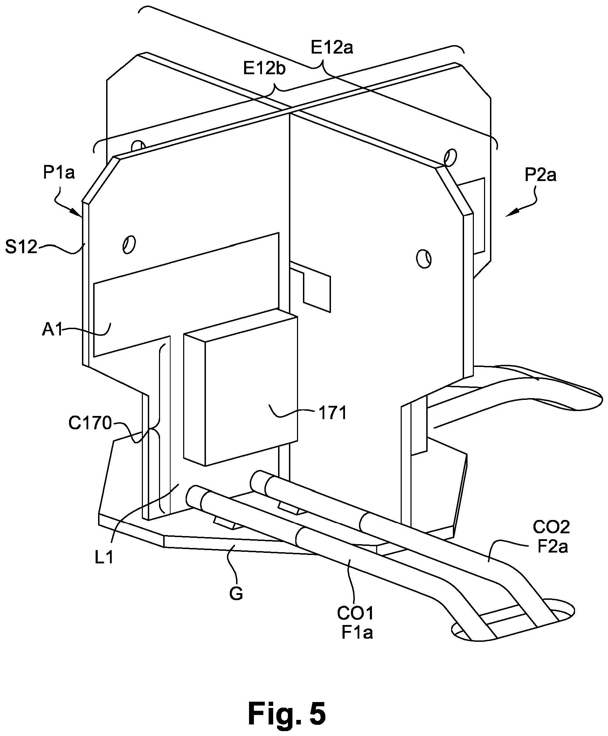

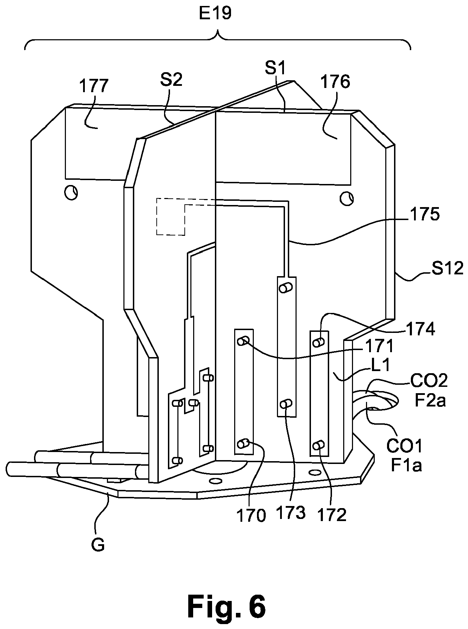

**Figures 5** **and** **6** represent two perspective views of an antenna module comprising two orthogonal exemplars of a third embodiment of the radiating/receiving element according to the invention. This module comprises a ground plane G and two identical orthogonal multiband radiating/receiving elements E12a and E12b according to the invention. We will describe the element E12a only. It comprises a double-sided printed circuit on a dielectric substrate S12.

**Figure 5** shows a first side of the dielectric substrate S12. This first side comprises an etched dipole P1a-P2a. The pole P1a comprises an arm A1 and a leg L1 orthogonal to the leg L1. This latter is linked to a ground plane G. The pole P2a is similar. The poles P1a and P2a are symmetrical with respect to the symmetry axis of the whole antenna.

The etched dipole P1a-P2a is coupled (by an L line not visible on this Figure 5) to a circuit C170 for feeding and impedance matching. This latter embedded a pre-constructed module bound to the first side of the substrate S12. This pre-constructed module contains a multiplexer/de-multiplexer 171 dedicated only to this radiating-receiving element E12a. The multiplexer/demultiplexer 170 is linked, by two monoband ports, to two coaxial cables CO1-CO2 for receiving/transmitting signals respectively in two different frequency bands, F1a and F2a, for a first polarization plane.

**Figure 6** shows the second side of the dielectric substrate S12 supporting the radiating/receiving elements E12a. This second side supports:
- An etched L shaped feeding line 175 coupled to the dipole P1a-P2a that is etched on the first side.
- An etched director element comprising two rectangular conductive parts 176-177 that are a little shorter than the arms A1-A2 of the dipole P1a-P2a,
are parallel to these arms, and are further with respect to the ground plane G. This director element 176-177 is classically coupled to the dipole P1a-P2a for modifying its impedance and its radiation diagram.

The multiplexer/demultiplexer 171, contained in the pre-constructed module, comprises:
- a first terminal traversing the substrate S12 and being soldered to the L shaped feeding line 175 that is coupled to the dipole P1a-P2a;
- a second terminal traversing the substrate S12 and being soldered to a first short micro stripline etched on the second side of the substrate S1;
- a third terminal traversing the substrate S12 and being soldered to a second short micro stripline etched on the second side of the substrate S1.

The first short micro stripline constitutes a first monoband access port 172 that is connected to the inner conductor of the CO1 coaxial cable, whereas the ground plane G is connected to the shield of this coaxial cable CO1. The access port 172 receives/transmits a first monoband signal in the frequency band F1a.

The second short micro stripline constitutes a second monoband access port 171 that is connected to the inner conductor of the coaxial cable CO2, whereas the ground plane G is connected to the shield of this coaxial cable CO2. The access port 171 receives/transmits a monoband second signal in the frequency band F2a. At the terminal 173, the two monoband signals are multiplexed and are supplied/received to/from the L shaped feeding line 175 that is coupled to the dipole P1a-P2a. So the feeding and impedance matching circuit C170 embeds a multiplex/demultiplexer 171 without modifying the global radiating/receiving element dimensions.

Such a pre-constructed duplexer module 171 is available on the market.

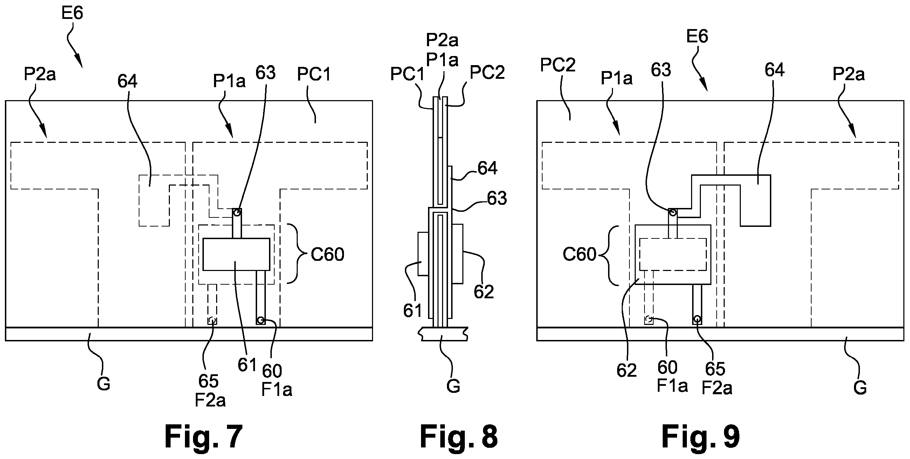

**Figures 7 to 9** schematically represent a fourth embodiment E6 of the radiating/receiving element according to the invention, comprising two pre-constructed modules. **Figure 7** is a front view, **Figure 9** is a view from behind, and **Figure 8** is a side view.

It is carried by two printed circuit boards that are superimposed:
- A double sided printed circuit board PC1.
- A single sided printed circuit board PC2.

A printed circuit dipole P1a-P2a, that is similar to the dipole P1a-P2a described with reference to Figure 3, has been etched on a first face of the double sided printed circuit board PC1, or on a first face of the second printed circuit board PC2, so that the dipole P1a-P2a is sandwiched between the first side of the first printed circuit board PC1 and the first side of the second printed circuit board PC2.

The feeding and impedance matching circuit C60 of this fourth embodiment comprises a multiplexer/demultiplexer constituted of two pre-constructed modules that respectively contain two pass band filters 61 and 62. The filter 61 is bound to the second side of the printed circuit PC1, in front of the leg of the pole P1A, whereas the filter 62 is bound to the second side of the printed circuit PC2, in front of the leg of the same pole P1a. So the feeding and impedance matching circuit C60 embeds a multiplex/demultiplexer without modifying the radiating/receiving element global dimensions except a little more thickness due to the thickness of two stacked PCBs.

The first filter 61 is bound to the second side of the printed circuit board PC1. The first side of the printed circuit board PC2 carries no conductive part. The second filter 62 is bound to the second side of the second printed circuit board PC2.

A first terminal of this filter 61 is linked, by a via 63 through the two printed circuit boards PC1, PC2, to a L shaped feeding line 64 that is etched on the second side of the printed circuit board PC2, and that is coupled to the dipole P1a, P2a. A second terminal of this filter 61 is linked to a short micro stripline constituting an access port 60 that is connected to the inner conductor of a coaxial cable (not represented), whereas the ground plane G is connected to the shield of this coaxial cable. The access port 60 receives/transmits a first monoband signal in the frequency band F1a.

A first terminal of the filter 62 is linked to a short micro stripline constituting an access port 65 that is connected to the inner conductor of a coaxial cable (not represented), whereas the ground plane G is connected to the shield of this coaxial cable. The access port 65 receives/transmits a first monoband signal in the frequency band F2a.

The second filter 62 is a rectangular module bound on the second side of the printed circuit board PC2. A first terminal of the filter 62 is linked to the L shaped feeding line 64 at the point where the via 63 traverses the two printed circuit boards PC1, PC2.

A second terminal of the filter 62 is linked to a short micro stripline constituting an access port 65 that is connected to the inner conductor of a coaxial cable (not represented), whereas the ground plane G is connected to the shield of this coaxial cable. The access port 65 receives/transmits a second monoband signal in the frequency band F2a.

At the via 63, the two signals are multiplexed/demultiplexed and are sent/received to/from the L shaped feeding line 64 that is coupled to the dipole P1a, P2a.

Such pre-constructed filter modules are available on the market.

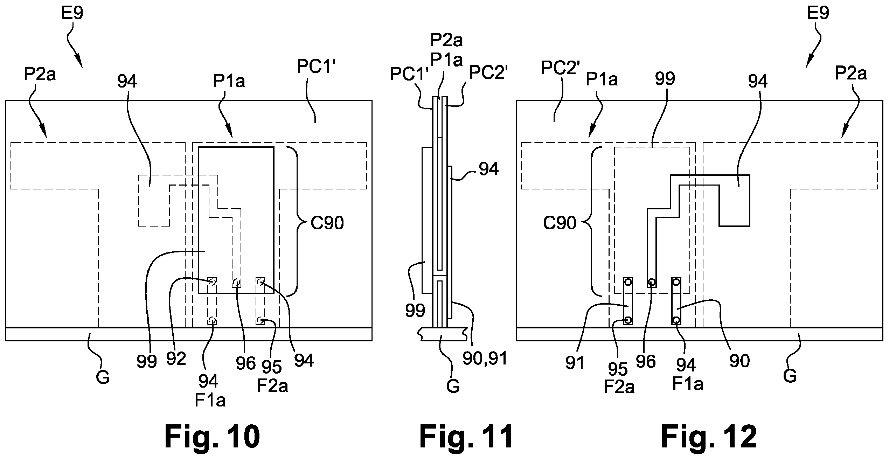

**Figures 10 to 12** schematically represent a fifth embodiment E9 of the radiating/receiving element according to the invention, comprising a pre-constructed module. **Figure 10** is a front view, **Figure 12** is a view from behind, and **Figure 11** is a side view. It is carried by two printed circuit boards that are superimposed:
- A double sided printed circuit board PC1'.
- A single sided printed circuit board PC2'.

A printed circuit dipole P1a-P2a that is similar to the dipole P1a-P2a described with reference to Figure 3 has been etched on a first face of the double sided printed circuit board PC1', or on a first face of the second printed circuit board PC2', so that the dipole P1a-P2a is sandwiched between the first side of the first printed circuit board PC1' and the first side of the second printed circuit board PC2'.

The feeding and impedance matching circuit C90 of this fifth embodiment embeds a pre-constructed module that contains a multiplexer/demultiplexer 99, without modifying the dimensions of the radiating/receiving element, except a little more thickness. This multiplexer/demultiplexer 99 is bound to the second face of the first printed circuit board PC1', in front of the leg of the pole P1a.

On the second face of the printed circuit board PC2' an L shaped feeding line 94 has been etched. It is coupled to the dipole P1a-P2a.

The multiplexer 99 comprises:
- a first terminal 94 traversing both printed circuits PC1', PC2' and being soldered to a first short micro stripline 90 etched on the second side of the printed circuit board PC2';
- a second terminal 95 traversing both printed circuits PC1', PC2' and being soldered to a second short micro stripline 91 etched on the second side of the printed circuit board PC2'.
- a third terminal 96 traversing both printed circuits PC1', PC2' and being soldered to the L shaped feeding line 94 that is coupled to the dipole P1a-P2a.

The first short micro stripline constitutes a first monoband access port 94 that is connected to the inner conductor of a coaxial cable (not represented), whereas the ground plane G is connected to the shield of this coaxial cable. The access port 94 receives/transmits a first monoband signal in the frequency band F1a.

The second short micro stripline constitutes a second monoband access port 95 that is connected to the inner conductor of a coaxial cable (not represented), whereas the ground plane G is connected to the shield of this coaxial cable. The access port 95 receives/transmits a monoband first signal in the frequency band F2a. At the third terminal 96 of the multiplexer/demultiplexer 99, the two monoband signals are multiplexed/demultiplexed and are supplied/received to/from the L shaped feeding line 94 that is coupled to the dipole P1a, P2a.

Such a pre-constructed filter module is available on the market.

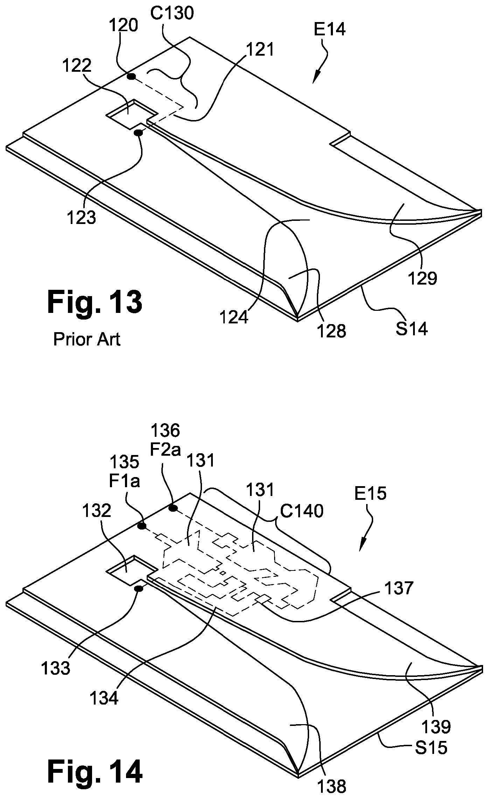

**Figure 13** schematically represents an antipodal Vivaldi radiating/receiving element E14 according to the prior art. It comprises a Vivaldi dipole 128-129. It is made on a double sided printed circuit board S14. The Vivaldi dipole 128-129 is etched on a first side of a printed circuit board S14. It comprises a resonant empty square space 123 and an exponentially tapered slot 124 exiting from this empty square space 123.

On the second side of the printed circuit board S14, this classical antipodal Vivaldi radiating/receiving element comprises:
- A port 120 for receiving/transmitting a monoband signal.
- A feeding and impedance matching circuit C130 comprising a simple feeding line 121 linked to the port 120, and linked to a sector-shaped area 123 that excites the empty square space 122.

**Figure 14** schematically represents a sixth embodiment that is an antipodal Vivaldi radiating/receiving element E15 modified according to the invention. On the first side of a double sided printed circuit board S15, it comprises a Vivaldi dipole 138-139, a resonant empty square space 132, and an exponentially tapered slot 134 exiting from this empty square space 132.

On the second face of the printed circuit board S15, it comprises:
- Two monoband ports 135, 136 for receiving/transmitting respectively two monoband signals in two different frequency bands F1a and F2a.
- A feeding and impedance matching circuit C140 comprising a classical printed circuit multiplexer/demultiplexer 131 that does not modify the dimensions of the radiating/receiving element, with respect to the radiating/receiving element according to the prior art. This multiplexer/demultiplexer 131 comprises two ports that are respectively linked by short micro striplines to the two ports 135 and 136, and it comprises a third port 137 linked to a feeding line 134 terminated with a sector-shaped area 133, that excites the empty square space 132.

For instance, the multiplexer/demultiplexer 131 is constituted of two classical band pass filters. The construction of this multiplexer/demultiplexer 131 is within the scope of a man skilled in the art.

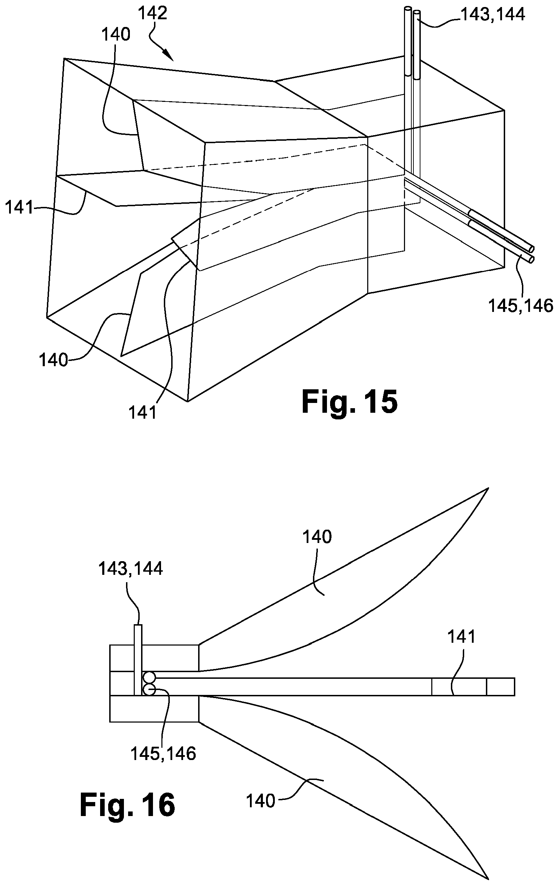

**Figure 15** schematically represents a horn antenna 142 having a square section and comprising two orthogonal antipodal Vivaldi dipoles 140, 141 modified according to the invention, similar to the Vivaldi dipole E15 described with reference to Figure 14.

**Figure 16** schematically represent a section of the horn antenna 142 along the plane of the Vivaldi dipole 140. The two orthogonal antipodal Vivaldi dipoles 140, 141 have a common symmetry axis. They are similar to the one described with reference to the Figure15. The only difference is that the outer ridges of the Vivaldi dipoles 140, 141 are cut so that they match the shape of the interior of the horn 142.

Two coaxial probes 143, 144 are linked to the two ports of the element 141 for respectively supplying/receiving a first monoband signal and a second monoband signal, for a first polarization plane.

Two coaxial probes 145, 146 are linked to the two ports of the element 142 for respectively supplying/receiving a first monoband signal and a second monoband signal, for a second polarization plane.

The scope of the invention is not limited to a radiating/receiving element comprising a double sided printed circuit. The printed circuit may comprise more many conductive layers, or may comprise a dipole made of a buckled metal sheet.

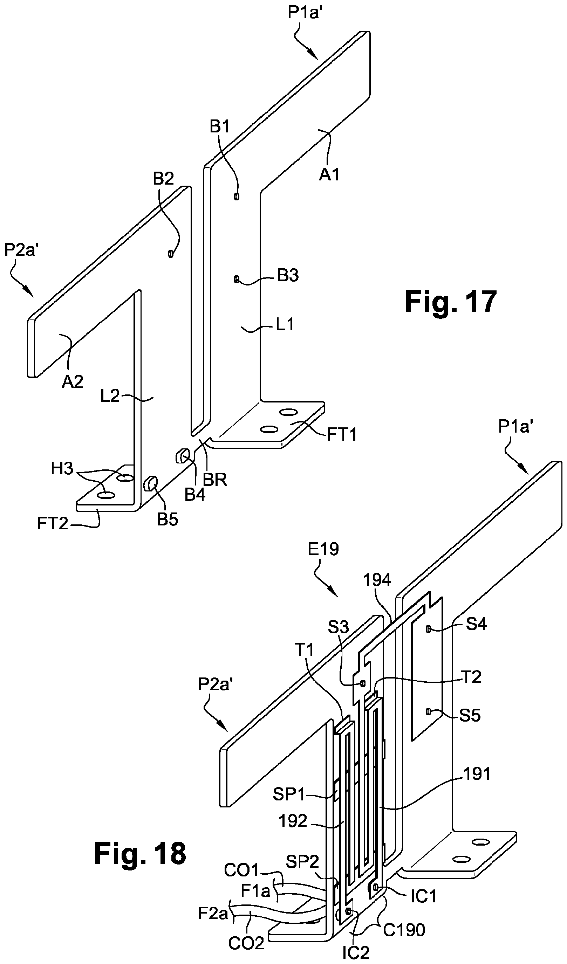

**Figures 17** represents a dipole P1a'-P2a' made of a buckled brass plate, that is part of a seventh embodiment E19 of the radiating/receiving element according to the invention, comprising such a dipole made of a buckled brass plate, 0.5 mm thick for instance.

As represented on **Figure 17****,** the dipole P1a'- P2a' comprises two L shaped poles. The pole P1a' comprises a leg L1 being 75 mm long, and an arm A1 that is orthogonal to the arm A1 and that is 100 mm long and 20 mm wide. The pole P2a' comprises a leg L2 being 75 mm long, and an arm A2 that is orthogonal to the arm A1, this arm A1 being 100mm long and 20 mm wide. The legs L1 and L2 are parallel to each other and are separated by a constant distance of 8 mm between them. Each leg L1, L2 can be screwed to a same ground plane (not represented) by a folded foot, respectively FT1 and FT2, comprising holes H3 for screws. These feet FT1, FT2 are on opposite sides with respect to the plane of the legs L1, L2. The two arms A1, A2 are aligned and constitute the radiating/receiving parts of the dipole.

**Figure 18** represents a complete view of the seventh embodiment E19 of the radiating/receiving element according to the invention, comprising the dipole P1A'-P2a' represented on Figure 17. It comprises a feeding and impedance matching circuit C190 along the leg L2 of the pole P2a'. I comprises an L shaped feeding line 194 that is classically coupled to the dipole P1a'- P2a'.

The feeding and impedance matching circuit C190 embeds a multiplexer/demultiplexer 191-192 without modifying the dimensions of the radiating/receiving element, except a little increase of the thickness. This multiplexer/demultiplexer is constituted, in this example, by a classical combline band pass filter 191 and a classical interdigital band pass filter 192, respectively for a frequency band F1a and for a frequency band F2a.

The feeding and impedance matching circuit C190 is made of a cut brass sheet 0.3 mm thick. It is parallel to the plane of the dipole and is supported by two spacers SP1, SP2 that are two dielectric sticks bound to the leg L2. In addition, it is supported by two tongs T1, T2 that are folded parts of the brass sheet constituting the feeding and impedance matching circuit C190. These two tongues T1, T2 are soldered onto the leg L1.

A terminal of the feeding and impedance matching circuit C190 is linked to the L shaped feeding line 194 that is classically coupled to the dipole P1a'-P2a'. This L shaped feeding line 194 has been cut in the same brass plate as the feeding and impedance matching circuit C190. It is supported by three dielectric studs S3, S4, S5 that are snapped into bores B1, B2, B3 cut into the legs L1 and L2

Two other terminals of the feeding and impedance matching circuit C190 are respectively soldered to the inner conductors of two coaxial cables CO1, CO2. These coaxial cables traverse the leg L1 via two bores B4, B5. Their shields are soldered on the edges of these bores B4, B5.

The coaxial cable CO1 receives/transmits a first monoband signal in the frequency band F1a. The coaxial cable CO2 receives/transmits a second monoband signal in the frequency band F2a. The multiplexer/demultiplexer 191-192 multiplexes/demultiplexes these two monoband signals and supplies/receives a multiband signal to/from the L shaped feeding line 194 that is coupled to the dipole P1a' - P2a'.

The construction of a multiplexer/demultiplexer made of a combline filter 191 and an interdigital filter 192, cut into a brass sheet, is within the scope of a man skilled in the art.

## Claims

1. A radiating/receiving element (E2a) for a compact multiband base station antenna, said radiating/receiving element (E2a) comprising two radiating/receiving dipole parts (P1a, P2a) and a feeding and impedance matching circuit (C2a) coupled to the radiating/receiving dipole parts (P1a, P2a); wherein a multiplexer/demultiplexer (MD2a), for a plurality of frequency bands (F1a, F2a, F3a), is embedded into said feeding and impedance matching circuit (C2a) coupled to the radiating/receiving dipole parts (P1a, P2a),

2. A radiating/receiving element (E4) according to claim 1, comprising a printed circuit board (S4);
wherein said two radiating/receiving dipole parts (P1a, P2a) are etched on a first side of a printed circuit board (S4);
and wherein said feeding and impedance matching circuit (C40) embedding a multiplexer/demultiplexer (41-42) is etched on the second side of said first printed circuit board (S4).

3. A radiating/receiving element (E12a) according to claim 1, comprising a printed circuit board (S12), wherein said two radiating/receiving dipole parts (P1a, P2a) are etched on a first side of the printed circuit board (S12); wherein a first part of said feeding and impedance matching circuit (170) is a preconstructed module containing a multiplexer/demultiplexer (171) bound to the first side of the first printed circuit board (S12);
and wherein a second part (175) of the feeding and impedance matching circuit (170) is etched on the second side of the printed circuit board (S12).

4. A radiating/receiving element (E6) according to claim 1, comprising a first (PC1) and a second (PC2) printed circuit board, wherein said two radiating/receiving dipole parts (P1a, P2a) are etched on a first side of the first printed circuit board (PC1) or of the second printed circuit board (PC2), and are sandwiched between the first side of the first printed circuit board (PC1) and the first side of the second printed circuit board (PC2);
wherein the feeding and impedance matching circuit (C60) embeds:
- a first pre-constructed module containing a first part (61) of the multiplexer/demultiplexer and being bound to the second side of the first printed circuit board (PC1);
- and a second pre-constructed module containing a second part (62) of the multiplexer/demultiplexer and being bound to the second side of the second printed circuit board (PC2);and wherein the feeding and impedance matching circuit (C60) further comprises a feeding line (64) coupled to the said two radiating/receiving dipole parts (P1a, P2a), and being etched on the second side of the second printed circuit board (PC2).

5. A radiating/receiving element (E9) according to claim 1, comprising a first (PC1') and a second (PC2') printed circuit board, wherein said two radiating/receiving dipole parts (P1a, P2a) are etched on a first side of the first printed circuit board (PC'1) or of the second printed circuit board (PC2'), and are sandwiched between the first side of the first printed circuit board (PC1) and the first side of the second printed circuit board (PC2');
wherein said feeding and impedance matching circuit (C90) embeds a pre-constructed module containing a multiplexer/demultiplexer (99) and is bound to the second side of the first printed circuit board (PC1');
and wherein the feeding and impedance matching circuit (C90) further comprises a feeding line (94) coupled to said two radiating/receiving dipole parts (P1a, P2a), and being etched on the second side of the second printed circuit board (PC2').

6. A radiating/receiving element (E15) according to claim 2, wherein said two radiating/receiving dipole parts are a Vivaldi dipole (138, 139).

7. A radiating/receiving element (E19) according to claim 1, wherein said said two radiating/receiving dipole parts (P1a, P2a) are made of a buckled metal sheet;
and wherein said feeding and impedance matching circuit (C190) embedding a multiplexer/demultiplexer (191, 192) is cut in a metal sheet that is parallel to the plane of the dipole and is supported by spacers (SP1, SP2) bound to said radiating/receiving parts (P1a, P2a).

8. A radiating/receiving element (E4) according to claim 2, wherein said multiplexer/demultiplexer comprises a comb filter (41) and an interdigital filter (42).

9. A radiating/receiving element (E5) according to claim 2, wherein said multiplexer/demultiplexer is a drop-line multiplexer/demultiplexer (51).

10. A radiating/receiving element (E19) according to claim 8, wherein said multiplexer/demultiplexer comprises a combline filter (191) and an interdigital filter (192).

11. A multiband antenna (E12a-E12B; 142) comprising at least one radiating/receiving element according to one of the claims 1 to 10.

## Patentansprüche

1. Strahlungs-/Empfangselement (E2a) für eine kompakte Mehrbandbasisstationsantenne, wobei das Strahlungs-/Empfangselement (E2a) zwei Strahlungs-/ Empfangsdipolteile (P1a, P2a) und eine Speise- und Impedanzanpassungsschaltung (C2a), die an die Strahlungs-/Empfangsdipolteile (P1a, P2a) gekoppelt ist, umfasst;
wobei ein Multiplexer/Demultiplexer (MD2a) für eine Vielzahl von Frequenzbändern (F1a, F2a, F3a) in die Speise- und Impedanzanpassungsschaltung (C2a), die an die Strahlungs-/Empfangsdipolteile (P1a, P2a) gekoppelt ist, eingebettet ist.

2. Strahlungs-/Empfangselement (E4) nach Anspruch 1, das eine Leiterplatte (S4) umfasst;
wobei die zwei Strahlungs-/Empfangsdipolteile (P1a, P2a) auf eine erste Seite einer Leiterplatte (S4) geätzt sind;
und wobei die Speise- und Impedanzanpassungsschaltung (C40), in die ein Multiplexer/Demultiplexer (41-42) eingebettet ist, auf die zweite Seite der ersten Leiterplatte (S4) geätzt ist.

3. Strahlungs-/Empfangselement (E12a) nach Anspruch 1, das eine Leiterplatte (S12) umfasst, wobei die zwei Strahlungs-/Empfangsdipolteile (P1a, P2a) auf eine erste Seite der Leiterplatte (S12) geätzt sind;
wobei ein erster Teil der Speise- und Impedanzanpassungsschaltung (170) ein vorkonstruiertes Modul ist, das einen Multiplexer/Demultiplexer (171) enthält, der an die erste Seite der ersten Leiterplatte (S12) gebunden ist;
und wobei ein zweiter Teil (175) der Speise- und Impedanzanpassungsschaltung (170) auf die zweite Seite der Leiterplatte (S12) geätzt ist.

4. Strahlungs-/Empfangselement (E6) nach Anspruch 1, das eine erste (PC1) und eine zweite (PC2) Leiterplatte umfasst, wobei die zwei Strahlungs-/Empfangsdipolteile (P1a, P2a) auf eine erste Seite der ersten Leiterplatte (PC1) oder der zweiten Leiterplatte (PC2) geätzt und zwischen der ersten Seite der ersten Leiterplatte (PC1) und der ersten Seite der zweiten Leiterplatte (PC2) eingeschlossen sind;
wobei Folgendes in die Speise- und Impedanzanpassungsschaltung (C60) eingebettet ist:
- ein erstes vorkonstruiertes Modul, das einen ersten Teil (61) des Multiplexers/Demultiplexers enthält und an die zweite Seite der ersten Leiterplatte (PC1) gebunden ist;
- ein zweites vorkonstruiertes Modul, das einen zweiten Teil (62) des Multiplexers/Demultiplexers enthält und an die zweite Seite der zweiten Leiterplatte (PC2) gebunden ist; und wobei die Speise- und Impedanzanpassungsschaltung (C60) ferner eine Speiseleitung (64) umfasst, die an die zwei Strahlungs-/Empfangsdipolteile (P1a, P2a) gekoppelt und auf die zweite Seite der zweiten Leiterplatte (PC2) geätzt ist.

5. Strahlungs-/Empfangselement (E9) nach Anspruch 1, das eine erste (PC1') und eine zweite (PC2') Leiterplatte umfasst, wobei die zwei Strahlungs-/Empfangsdipolteile (P1a, P2a) auf eine erste Seite der ersten Leiterplatte (PC'1) oder der zweiten Leiterplatte (PC2') geätzt und zwischen der ersten Seite der ersten Leiterplatte (PC1) und der ersten Seite der zweiten Leiterplatte (PC2') eingeschlossen sind;
wobei in die Speise- und Impedanzanpassungsschaltung (C90) ein vorkonstruiertes Modul eingebettet ist, das einen Multiplexer/Demultiplexer (99) enthält, und an die zweite Seite der ersten Leiterplatte (PC1') gebunden ist;
und wobei die Speise- und Impedanzanpassungsschaltung (C90) ferner eine Speiseleitung (94) umfasst, die an die zwei Strahlungs-/Empfangsdipolteile (P1a, P2a) gekoppelt und auf die zweite Seite der zweiten Leiterplatte (PC2') geätzt ist.

6. Strahlungs-/Empfangselement (E15) nach Anspruch 2, wobei die zwei Strahlungs-/Empfangsdipolteile ein Vivaldidipol (138, 139) sind.

7. Strahlungs-/Empfangselement (E19) nach Anspruch 1, wobei die zwei Strahlungs-/Empfangsdipolteile (P1a, P2a) aus einem geknickten Metallblech bestehen; und
wobei die Speise- und Impedanzanpassungsschaltung (C190), in die ein Multiplexer/Demultiplexer (191, 192) eingebettet ist, in ein Metallblech geschnitten ist, das parallel zur Ebene des Dipols verläuft und von Abstandhaltern (SP1, SP2) gestützt wird, die an die Strahlungs-/Empfangsteile (P1a, P2a) gebunden sind.

8. Strahlungs-/Empfangselement (E4) nach Anspruch 2, wobei der Multiplexer/Demultiplexer ein Kammfilter (41) und ein Interdigitalfilter (42) umfasst.

9. Strahlungs-/Empfangselement (E5) nach Anspruch 2, wobei der Multiplexer/Demultiplexer ein Dropline-Multiplexer/- Demultiplexer (51) ist.

10. Strahlungs-/Empfangselement (E19) nach Anspruch 8, wobei der Multiplexer/Demultiplexer ein Kammleitungsfilter (191) und ein Interdigitalfilter (192) umfasst.

11. Mehrbandantenne (E12a-E12B; 142), die mindestens ein Strahlungs-/Empfangselement nach einem der Ansprüche 1 bis 10 umfasst.

## Revendications

1. Élément rayonnant/récepteur (E2a) pour antenne multibande compacte de station de base, ledit élément rayonnant/récepteur (E2a) comprenant deux parties de dipôle rayonnant/récepteur (P1a, P2a) et un circuit d'alimentation et d'adaptation d'impédance (C2a) couplé aux parties de dipôle rayonnant/récepteur (P1a, P2a) ;
dans lequel un multiplexeur/démultiplexeur (MD2a), pour une pluralité de bandes de fréquences (F1a, F2a, F3a), est intégré dans ledit circuit d'alimentation et d'adaptation d'impédance (C2a) couplé aux parties de dipôle rayonnant/récepteur (P1a, P2a).

2. Élément rayonnant/récepteur (E4) selon la revendication 1, comprenant une carte de circuit imprimé (S4) ;
dans lequel lesdites deux parties de dipôle rayonnant/récepteur (P1a, P2a) sont gravées sur un premier côté de carte de circuit imprimé (S4) ;
et dans lequel ledit circuit d'alimentation et d'adaptation d'impédance (C40) intégrant un multiplexeur/démultiplexeur (41-42) est gravé sur le second côté de ladite première carte de circuit imprimé (S4).

3. Élément rayonnant/récepteur (E12a) selon la revendication 1, comprenant une carte de circuit imprimé (S12), dans lequel lesdites deux parties de dipôle rayonnant/récepteur (P1a, P2a) sont gravées sur un premier côté de la carte de circuit imprimé (S12) ;
dans lequel une première partie dudit circuit d'alimentation et d'adaptation d'impédance (170) est un module préconstruit contenant un multiplexeur/démultiplexeur (171) lié au premier côté de la première carte de circuit imprimé (S12) ;
et dans lequel une seconde partie (175) du circuit d'alimentation et d'adaptation d'impédance (170) est gravée sur le second côté de la carte de circuit imprimé (S12).

4. Élément rayonnant/récepteur (E6) selon la revendication 1, comprenant une première (PC1) et une seconde (PC2) carte de circuit imprimé, dans lequel lesdites deux parties de dipôle rayonnant/récepteur (P1a, P2a) sont gravées sur un premier côté de la première carte de circuit imprimé (PC1) ou de la seconde carte de circuit imprimé (PC2), et sont prises en sandwich entre le premier côté de la première carte de circuit imprimé (PC1) et le premier côté de la seconde carte de circuit imprimé (PC2) ;
dans lequel le circuit d'alimentation et d'adaptation d'impédance (C60) intègre :
- un premier module préconstruit contenant une première partie (61) du multiplexeur/démultiplexeur et étant lié au second côté de la première carte de circuit imprimé (PC1) ; et
- un second module préconstruit contenant une seconde partie (62) du multiplexeur/démultiplexeur et étant lié au second côté de la seconde carte de circuit imprimé (PC2) ; et
dans lequel le circuit d'alimentation et d'adaptation d'impédance (C60) comprend en outre une ligne d'alimentation (64) couplée auxdites deux parties de dipôle rayonnant/récepteur (P1a, P2a) et étant gravée sur le second côté de la seconde carte de circuit imprimé (PC2).

5. Élément rayonnant/récepteur (E9) selon la revendication 1, comprenant une première (PC1') et une seconde (PC2') carte de circuit imprimé, dans lequel lesdites deux parties de dipôle rayonnant/récepteur (P1a, P2a) sont gravées sur un premier côté de la première carte de circuit imprimé (PC'1) ou de la seconde carte de circuit imprimé (PC2'), et sont prises en sandwich entre le premier côté de la première carte de circuit imprimé (PC1) et le premier côté de la seconde carte de circuit imprimé (PC2') ;
dans lequel ledit circuit d'alimentation et d'adaptation d'impédance (C90) intègre un module préconstruit contenant un multiplexeur/démultiplexeur (99) et est lié au second côté de la première carte de circuit imprimé (PC1') ; et
dans lequel le circuit d'alimentation et d'adaptation d'impédance (C90) comprend en outre une ligne d'alimentation (94) couplée auxdites deux parties de dipôle rayonnant/récepteur (P1a, P2a) et étant gravée sur le second côté de la seconde carte de circuit imprimé (PC2').

6. Élément rayonnant/récepteur (E15) selon la revendication 2, dans lequel lesdites deux parties de dipôle rayonnant/récepteur sont un dipôle Vivaldi (138, 139).

7. Élément rayonnant/récepteur (E19) selon la revendication 1, dans lequel lesdites deux parties de dipôle rayonnant/récepteur (P1a, P2a) sont constituées de tôle emboutie ; et
dans lequel ledit circuit d'alimentation et d'adaptation d'impédance (C190) intégrant un multiplexeur/démultiplexeur (191, 192) est découpé dans une tôle qui est parallèle au plan du dipôle et est supporté par des entretoises (SP1, SP2) liées auxdites parties rayonnantes/réceptrices (P1a, P2a).

8. Élément rayonnant/récepteur (E4) selon la revendication 2, dans lequel ledit multiplexeur/démultiplexeur comprend un filtre en peigne (41) et un filtre interdigité (42).

9. Élément rayonnant/récepteur (E5) selon la revendication 2, dans lequel ledit multiplexeur/démultiplexeur est un multiplexeur/démultiplexeur de ligne de dérivation (51).

10. Élément rayonnant/récepteur (E19) selon la revendication 8, dans lequel ledit multiplexeur/démultiplexeur comprend un filtre en peigne (191) et un filtre interdigité (192).

11. Antenne multibande (E12a-E12B ; 142) comprenant au moins un élément rayonnant/récepteur selon l'une des revendications 1 à 10.
